(19) Europäisches Patentamt
European Patent Office
Office européen des brevets

(11) **EP 2 597 035 B1**

(12) **FASCICULE DE BREVET EUROPEEN**

(45) Date de publication et mention de la délivrance du brevet:
**18.10.2017   Bulletin 2017/42**

(21) Numéro de dépôt: **12007385.3**

(22) Date de dépôt: **26.10.2012**

(51) Int Cl.:
*G05D 1/08* *(2006.01)*          *B64C 27/28* *(2006.01)*

(54) **Procédé de pilotage assisté d'un aéronef à voilure tournante comprenant au moins une hélice propulsive, dispositif de pilotage assisté et aéronef**

Hilfssteuerungsverfahren eines Drehflügelflugzeugs, das mindestens eine Druckschraube umfasst, Hilfssteuerungsvorrichtung und Luftfahrzeug

Method for assisted piloting of a rotary wing aircraft comprising at least one screw propeller, assisted piloting device and aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2011   FR 1103561**

(43) Date de publication de la demande:
**29.05.2013   Bulletin 2013/22**

(60) Demande divisionnaire:
**17175676.0**
**17175700.8**

(73) Titulaire: **Airbus Helicopters**
**13725 Marignane Cedex (FR)**

(72) Inventeurs:
• **Salesse-Lavergne, Marc**
  **13011 Marseille (FR)**
• **Queiras, Nicolas**
  **13170 Les Pennes Mirabeau (FR)**
• **Eglin, Paul**
  **13830 Roquefort La Bédoule (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A1- 2008 237 392**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de pilotage assisté d'un aéronef à voilure tournante comprenant au moins une hélice propulsive, un dispositif de pilotage assisté et un aéronef.

Parmi les aéronefs, on connaît notamment les giravions pourvus d'une voilure tournante. De plus, certains giravions sont en outre munis d'un groupe propulsif additionnel.

Un aéronef à voilure tournante muni d'un groupe propulsif additionnel, ce groupe propulsif ayant au moins une hélice propulsive, est dénommé « aéronef hybride » par commodité par la suite.

Cet aéronef hybride peut comprendre :

- un moyen de commande de la poussée générée par le groupe propulsif,

- un moyen de commande collective du pas collectif des pales de la voilure tournante, et

- un moyen de commande cyclique du pas cyclique des pales de la voilure tournante.

Dès lors, on constate que les commandes de vol sont redondées.

En effet, pour contrôler l'accélération longitudinale de l'aéronef hybride, un pilote peut utiliser le moyen de commande de la poussée, et/ ou à l'instar d'un hélicoptère classique le moyen de commande cyclique.

De même, pour contrôler l'accélération verticale de l'aéronef hybride afin de contrôler la montée ou la descente de l'aéronef hybride, un pilote peut utiliser à l'instar d'un hélicoptère classique le moyen de commande collective sans changer l'assiette de l'aéronef hybride, et/ou peut par exemple d'une part changer l'assiette longitudinale de l'aéronef à l'aide du moyen de commande cyclique et d'autre part utiliser le moyen de commande de la poussée.

On comprend qu'une multitude de combinaisons de commande sont envisageables pour piloter un aéronef hybride.

Il peut donc être utile de prévoir un procédé et un dispositif allégeant la charge de travail du pilote en l'aidant lors de manoeuvres réalisées en pilotant la voilure tournante et le groupe propulsif.

On note que l'état de la technique inclut le document US 2008/0237392 présentant un aéronef pourvu d'une voilure tournante, d'une aile fixe et d'une hélice propulsive.

Un système de contrôle de l'aéronef permet à une personne de sélectionner un biais de contrôle pour atteindre un objectif opérationnel.

Plus précisément, l'aéronef comprend un module de contrôle vertical et longitudinal de l'aéronef recevant des données d'entrée relatives à des commandes de changement d'un angle de tangage et d'une vitesse verticale.

Ces données d'entrée sont filtrées puis subissent un traitement avant d'être transmises à un module d'inversion, le module d'inversion déterminant les changements à apporter à des moyens de commande de l'aéronef.

La présente invention a alors pour objet de proposer un procédé alternatif de pilotage assisté d'un aéronef hybride pour alléger la charge de travail d'un pilote de cet aéronef hybride.

L'invention vise un procédé de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Selon ce procédé, on traduit un ordre du pilote de l'aéronef donné pour requérir un déplacement selon une direction en une consigne d'accélération selon cette direction, puis on transforme cette consigne d'accélération par des lois prédéterminées en :

- au moins une consigne de tenue d'assiette longitudinale transmise à un premier système automatique de tenue d'assiette longitudinale contrôlant un pas cyclique longitudinal des deuxièmes pales de la voilure tournante pour respecter ladite consigne de tenue d'assiette longitudinale, et

- une première consigne de tenue de facteur de charge dans une direction longitudinale de l'aéronef parallèle à un axe de roulis de l'aéronef transmise à un deuxième système automatique de tenue dudit facteur de charge contrôlant un pas collectif des premières pales du groupe propulsif pour respecter ladite première consigne.

Dès lors des boucles de régulation utilisent la consigne de tenue d'assiette longitudinale et la première consigne pour le contrôle de l'aéronef.

Il est à noter que l'on entend par « assiette longitudinale » l'angle de tangage de l'aéronef.

Par suite, le pilote peut se contenter de fournir un ordre pour requérir le déplacement de l'aéronef selon une direction longitudinale ou verticale, le procédé permettant le contrôle automatique de l'aéronef en conséquence.

La charge de travail du pilote est alors allégée.

Il est à noter que l'on entend par direction longitudinale une direction parallèle à la direction longitudinale selon laquelle s'étend l'aéronef et assimilable à l'axe de roulis de l'aéronef, et par direction verticale une direction parallèle à la pesanteur.

Le procédé peut de plus comporter une ou plusieurs des caractéristiques additionnelles qui suivent.

Selon l'invention, lorsque l'ordre est un ordre de déplacement selon une direction longitudinale parallèle à un axe de roulis de l'aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale transmise à un premier système automatique de tenue d'assiette longitudinale contrôlant un pas cyclique longitudinale des deuxièmes pales et en une première consigne de tenue de facteur de charge transmise à un deuxième système automatique de tenue de facteur de charge contrôlant un pas collectif des premières pales.

La consigne de tenue d'assiette longitudinale peut être déterminée par la première loi de contrôle longitudinal suivante :

$$\theta^* = (180/\mathrm{Pi})\cdot[(-a)\cdot(\gamma_x{}^*/g) - k]/(a+b)$$

où « $\theta^*$ » représente la consigne de tenue d'assiette longitudinale exprimée en degrés, « Pi » représente le nombre $\pi$, « $\gamma_x{}^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale,

Par ailleurs, la première consigne de tenue de facteur de charge peut être déterminée par la deuxième loi de contrôle longitudinal suivante :

$$Nx^* = [b\cdot(\gamma_x{}^*/g) - k]/(a+b)$$

où « Nx* » représente la première consigne de tenue de facteur de charge, « $\gamma_x{}^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la première consigne de tenue d'assiette longitudinale peut être modifiée par incrémentation ou décrémentation par un organe de réglage d'assiette, l'organe de réglage d'assiette pouvant être un organe de commande impulsionnelle monté sur une poignée de commande cyclique de l'aéronef.

Selon une première variante du premier mode de réalisation, on considère que la troisième constante longitudinale est égale à zéro pour annuler ladite première consigne de tenue de facteur de charge lorsque le pilote ne donne pas un ordre de déplacement selon une direction longitudinale, la consigne d'accélération longitudinale étant nulle.

Dans cette configuration, lors des manoeuvres à cabrer par exemple, ou lors des changements de références d'assiettes longitudinales par l'organe de réglage d'assiette, le deuxième système automatique de tenue du facteur de charge agit sur une chaîne de commande pour abaisser le pas collectif des premières pales. La puissance consommée par les hélices reste alors quasi constante, alors que la vitesse longitudinale de l'aéronef diminue à cause de la manoeuvre.

Toujours dans cette configuration, lors des manoeuvres à piquer, le deuxième système automatique de tenue du facteur de charge agit sur une chaîne de commande pour augmenter le pas collectif des premières pales. La puissance consommée par les hélices reste alors quasi constante, alors que la vitesse longitudinale de l'aéronef augmente à cause de la manoeuvre.

Cette configuration présente ainsi l'avantage de gérer la puissance des hélices pendant les phases de manoeuvre.

Selon une deuxième variante du premier mode de réalisation, lorsque le pilote ne donne pas un ordre de déplacement selon la direction longitudinale, le pilote peut choisir de passer dans un mode de tenue de vitesse où la première consigne de facteur de charge est égale au sinus de l'assiette longitudinale courante, la consigne d'accélération longitudinale étant nulle.

Dans ce cas, lors des manoeuvres à cabrer de l'appareil, le deuxième système automatique de tenue du facteur de charge agit sur une chaîne de commande afin d'augmenter le pas collectif des premières pales pour maintenir la vitesse longitudinale de l'aéronef quasi constante.

A l'inverse, lors des manoeuvres à piquer, lorsque le pilote agit sur le manche cyclique le deuxième système automatique de tenue du facteur de charge agit sur une chaîne de commande afin d'abaisser le pas collectif des premières pales pour contrer l'augmentation de vitesse liée à la manoeuvre.

Cette deuxième variante du premier mode de réalisation présente ainsi l'avantage de gérer la vitesse de l'appareil durant les manoeuvres. Elle peut être une alternative à une tenue de vitesse réalisée par le pas collectif des hélices du groupe propulsif.

Dans ce même mode, il est aisé de rajouter une deuxième boucle de régulation sur le pas collectif des premières pales avec le paramètre de vitesse air indiquée IAS pour davantage de robustesse.

Selon l'invention, on utilise la troisième constante longitudinale comme une consigne d'assiette d'équilibre « idéale » afin de faciliter le pilotage de l'aéronef. Le constructeur détermine ainsi une assiette d'équilibre « $\theta_{equi}$ » qui optimise les performances de l'aéronef dans des phases de vol stabilisées prédéterminées lorsque la consigne d'accélération longitudinale est nulle.

Pour conserver la vitesse de l'aéronef lors de la rejointe d'un point d'équilibre, la troisième constante longitudinale « k » est alors déterminé par la formule suivante :

$$k = -\sin(\theta_{equi}) \bullet (a+b),$$

où « $\bullet$ » représente le signe de la multiplication, « a » représente ladite première constante longitudinale, « b » représente ladite deuxième constante longitudinale, « $\theta_{equi}$ » représente une assiette d'équilibre prédéterminée optimisant des performances de l'aéronef dans des phases de vol stabilisées prédéterminées, la consigne d'accélération longitudinale $\gamma_x^*$ étant nulle.

Ainsi, en phase stabilisée l'assiette d'équilibre sera automatiquement gérée et prise comme référence par la stabilisation de base du pilote automatique. Dans cette même phase, la première consigne de tenue de facteur de charge Nx* correspond au terme « $\sin(\theta_{equi})$ » ce qui permet de conserver la vitesse de l'appareil lors de la rejointe du point d'équilibre.

Il est à noter que le dispositif mettant en oeuvre ce procédé peut comprendre un moyen de sélection manoeuvrable par le pilote pour choisir l'application de la première variante, de la deuxième variante ou de la troisième variante.

Eventuellement, les constantes longitudinales sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,

- une deuxième combinaison longitudinale selon laquelle la première constante longitudinale vaut « 0,001 », la deuxième constante longitudinale vaut « 1 », et la troisième constante longitudinale vaut zéro,

- une troisième combinaison longitudinale selon laquelle la première constante longitudinale vaut « 0,9 », la deuxième constante longitudinale vaut « 2 », et la troisième constante longitudinale vaut zéro.

Avantageusement, la première combinaison longitudinale est appliquée à basse vitesse longitudinale soit en dessous de 70 noeuds (kts). Selon cette première combinaison longitudinale, on commande principalement l'aéronef en modifiant l'assiette longitudinale de l'aéronef.

La deuxième combinaison longitudinale est éventuellement appliquée à haute vitesse longitudinale soit au dessus de 150 noeuds. Selon cette deuxième combinaison longitudinale, on commande principalement l'aéronef à l'aide du pas collectif des premières pales des hélices pour optimiser la traînée aérodynamique de l'aéronef.

La troisième combinaison longitudinale est éventuellement appliquée à moyenne vitesse longitudinale soit entre 70 noeuds et 150 noeuds. Selon cette troisième combinaison longitudinale, on commande l'aéronef à l'aide du pas collectif des premières pales des hélices et en modifiant l'assiette longitudinale de l'aéronef.

Selon une deuxième réalisation compatible avec la première réalisation, lorsque l'ordre est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale par des lois de contrôle vertical prédéterminées en une consigne de tenue d'assiette longitudinale transmise à un premier système automatique de tenue d'assiette longitudinale, en une première consigne de tenue de facteur de charge longitudinal transmise à un deuxième système automatique de tenue de facteur de charge contrôlant un pas collectif des premières pales, et en une deuxième consigne de tenue de facteur de charge vertical transmise à un troisième système automatique de tenue de facteur de charge contrôlant une variation du pas collectif des deuxièmes pales de la voilure tournante.

Lors des phases d'équilibre, ou suite à une consigne d'accélération verticale par exemple, cette architecture de commande permet de conserver à la fois une vitesse longitudinale et une vitesse verticale constantes. La phase de montée (ou de descente) s'effectue alors en gardant une incidence aérodynamique constante de l'aéronef. S'il le désire, le pilote peut toujours piloter l'aéronef avec une commande de vol cyclique des deuxièmes pales pour changer ou ajuster son assiette, les lois de contrôle maintenant toujours les mêmes vitesses longitudinale et verticale de la machine.

La consigne de tenue d'assiette longitudinale peut alors être déterminée par la première loi de contrôle vertical suivante :

$$\theta^* = \int q^* dt$$

avec

$$: q^* = (g/u) \cdot [-a'' \cdot (Nz^* + \cos\theta \cdot \cos\varphi) - k''] / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta^*$ » représente la consigne de tenue d'assiette longitudinale exprimée en radians, « $\Gamma z^*$ » représente la consigne d'accélération verticale demandée par le pilote, « g » représente l'accélération de la pesanteur, « u » représente la vitesse longitudinale courante de l'aéronef exprimée en mètre par seconde (m/s), « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta^*$ étant gelée lorsque la consigne d'accélération verticale est égale à 1.

Selon un autre aspect, la première consigne de tenue de facteur de charge peut être déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « $Nx^*$ » représente la première consigne de tenue de facteur de charge exprimée en nombre de « g », « $\Gamma z^*$ » représente la consigne d'accélération verticale demandée par le pilote, « g » représente l'accélération de la pesanteur, « • » représente le signe de la multiplication, « / » représente le signe de la division, « $\theta$ » représente l'assiette longitudinale courante exprimée en radians, « $\varphi$ » représente l'angle de roulis courant de l'aéronef exprimée en radians, « a' » représente une première constante verticale, « b' » représente une deuxième constante verticale, « k' » représente une troisième constante verticale, en l'absence dudit ordre de déplacement selon une direction verticale, ladite première consigne $Nx^*$ étant égale au sinus de l'assiette longitudinale courante $\theta$.

De plus, la deuxième consigne de tenue de facteur de charge peut être déterminée par la troisième loi de contrôle vertical suivante :

$$NZcoll^* = (b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $NZcoll^*$ » représente la deuxième consigne de tenue de facteur de charge exprimée en nombre de « g », « $\Gamma z^*$ » représente la consigne d'accélération verticale, « g » représente l'accélération de la pesanteur , « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale.

Eventuellement, les constantes verticales sont choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Ainsi, la première combinaison verticale permet de commander l'aéronef en pilotant le pas collectif des deuxièmes pales de la voilure tournante, sans changer l'assiette longitudinale de cet aéronef.
La deuxième combinaison verticale permet de commander l'aéronef en pilotant le pas collectif des deuxièmes pales de la voilure tournante, avec une assiette longitudinale à cabrer.
La troisième combinaison verticale permet de commander l'aéronef en pilotant le pas collectif des deuxièmes pales de la voilure tournante, avec une assiette longitudinale à piquer.
La quatrième combinaison verticale permet de commander l'aéronef en pilotant le pas collectif des premières pales des hélices pour accélérer, avec une assiette longitudinale à cabrer.
La cinquième combinaison verticale permet de commander l'aéronef en pilotant le pas collectif des premières pales des hélices pour accélérer, avec une assiette longitudinale à piquer.
La sixième combinaison verticale permet de commander l'aéronef en pilotant le pas collectif des premières pales des hélices pour décélérer, avec une assiette longitudinale à cabrer.
La septième combinaison verticale permet de commander l'aéronef en pilotant le pas collectif des premières pales des hélices pour décélérer, avec une assiette longitudinale à piquer.
On comprend que les valeurs des diverses constantes peuvent être ajustées sans sortir du cadre de l'invention.
Un moyen de sélection peut être implémenté pour permettre au pilote de choisir la combinaison souhaitée.
Dans un mode de réalisation préféré, une sélection automatique de ces divers modes de fonctionnement est réalisée pour ajuster les constantes présentes dans lesdites lois prédéterminées en fonction du cas de vol. On peut citer principalement comme paramètres définissant les cas de vol : la vitesse horizontale courante, la vitesse verticale courante, l'altitude courante, la puissance courante, la puissance disponible, l'assiette maximale admissible.
Outre un procédé, l'invention a aussi pour objet un dispositif pour appliquer ce procédé.
L'invention vise ainsi un dispositif de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Ce dispositif comporte au moins un moyen de commande pouvant être commandé par un pilote pour fournir un ordre de déplacement selon une direction, ledit dispositif ayant une unité de traitement reliée au moyen de commande, l'unité de traitement exécutant des instructions pour transformer ledit ordre en une consigne d'accélération selon ladite direction, puis pour transformer cette consigne d'accélération par des lois prédéterminées en au moins une consigne de tenue d'assiette longitudinale transmise à un premier système automatique de tenue d'assiette longitudinale contrôlant un pas cyclique longitudinal des deuxièmes pales de la voilure tournante et une première consigne de tenue de facteur de charge dans une direction longitudinale de l'aéronef parallèle à un axe de roulis dudit aéronef transmise à un deuxième système automatique de tenue de facteur de charge contrôlant le pas collectif des premières pales du groupe propulsif.

Par ailleurs, le dispositif peut notamment comporter une ou plusieurs des caractéristiques qui suivent.

Ce dispositif peut ainsi comporter un troisième système automatique de tenue de facteur de charge pour contrôler le pas collectif desdites deuxièmes pales, ladite unité de traitement transmettant une deuxième consigne de tenue de facteur de charge au troisième système automatique de tenue de facteur de charge.

En outre, le dispositif peut comporter un système de détermination de paramètres de vol.

Par exemple, un tel système de détermination de paramètres de vol est du type connu sous l'acronyme ADAHRS, « Air Data Attitude and Heading Reference System » en langue anglaise.

Le système de détermination de paramètres de vol peut par exemple déterminer les paramètres de vol courants de l'aéronef en temps réel, tels que la vitesse longitudinale courante, la vitesse de dérapage courante, la vitesse verticale courante, l'assiette longitudinale courante soit l'angle de tangage de l'aéronef, l'assiette transversale courante soit l'angle de roulis de l'aéronef, l'angle de lacet courant, le facteur de charge longitudinal courant, le facteur de charge de dérapage courant, le facteur de charge en élévation courant.

Le système de détermination de paramètres de vol peut alors fournir la valeur de courante de paramètres de vol exploités dans les lois prédéterminées permettant de transformer la consigne d'accélération établie.

On note que le système de détermination de paramètres de vol peut aussi inclure des moyens pour déterminer d'autres paramètres, tels que la vitesse air indiquée, l'altitude, la puissance consommée, la puissance disponible notamment pour ajuster les constantes présentes dans lesdites lois prédéterminées, pour permettre l'élection automatique d'une combinaison de constantes par exemple.

Le dispositif peut aussi comprendre un moyen de sélection du type décrit précédemment.

Enfin, l'invention vise aussi un aéronef hybride muni d'une voilure tournante comprenant au moins un rotor et un groupe propulsif comprenant au moins une hélice, cet aéronef étant pourvu d'un dispositif selon l'invention.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un aéronef selon l'invention,

- la figure 2, un schéma explicitant le procédé selon l'invention.

Les éléments présents dans plusieurs figures distinctes sont affectés d'une seule et même référence.

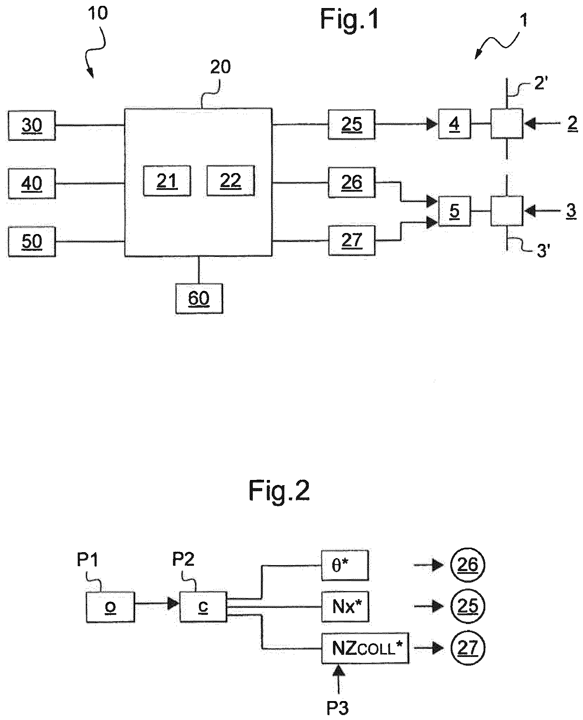

La figure 1 présente un aéronef 1 hybride représenté de manière schématique pour ne pas alourdir inutilement cette figure 1.

L'aéronef 1 comporte un groupe propulsif muni d'au moins une hélice 2 propulsive comprenant une pluralité de premières pales 2', ainsi qu'une voilure tournante comprenant au moins un rotor 3 comprenant une pluralité de deuxièmes pales 3'.

Dès lors, l'aéronef est pourvu d'un premier moyen de réglage 4 du pas des premières pales 2', ce premier moyen de réglage 4 pouvant être un vérin hydraulique apte à modifier le pas collectif des premières pales.

De même, l'aéronef est pourvu d'un deuxième moyen de réglage 5 du pas des deuxièmes pales 3', ce deuxième moyen de réglage 5 pouvant comprendre au moins trois servocommandes pour modifier le pas collectif et le pas cyclique des deuxièmes pales.

En effet, si les servocommandes s'étendent ou se rétractent de la même quantité, le pas collectif des deuxièmes pales 3' est modifié de façon identique. Par contre, si une servocommande se comporte différemment des autres, le pas cyclique des deuxièmes pales 3' est modifié de façon adaptée. On se référera à la littérature si nécessaire pour obtenir des compléments d'informations relatives au pas collectif et au pas cyclique d'un rotor.

L'aéronef 1 est pourvu d'un dispositif 10 de pilotage assisté pour diminuer la charge de travail d'un pilote.

Ce dispositif 10 inclut une unité de traitement 20 reliée à au moins un moyen de commande 30, 40, le pilote manoeuvrant ce moyen de commande pour donner un ordre déplacement O selon une direction.

Par exemple, le dispositif comprend un moyen de commande longitudinale 30 pour requérir un ordre de déplacement O selon une direction longitudinale de l'aéronef à savoir une direction parallèle à l'axe de roulis de l'aéronef, et un moyen de commande verticale 40 pour requérir un ordre de déplacement O selon une direction verticale à savoir parallèlement à la direction de la pesanteur.

Avantageusement, le moyen de commande longitudinal est situé sur la poignée de commande de pas cyclique des deuxièmes pales et le moyen de commande vertical est situé sur la poignée de commande de pas collectif des deuxièmes pales.

L'unité de traitement 20 peut comprendre un organe de calcul 21 et une mémoire 22, l'organe de calcul exécutant des instructions mémorisées dans la mémoire 22 pour appliquer le procédé selon l'invention de manière à fournir des instructions à un premier système automatique de tenue d'assiette longitudinale 26 relié au deuxième moyen de réglage 5 pour contrôler le pas cyclique longitudinale des deuxièmes pales 3', à un deuxième système automatique 25 de tenue de facteur de charge relié au premier moyen de réglage 4 pour contrôler le pas collectif des premières pales 2' et à un troisième système automatique 27 de tenue de facteur de charge relié au deuxième moyen de réglage 5 pour contrôler le pas collectif des deuxièmes pales 3'. Par suite, l'unité de traitement 20 peut être reliée à un système 50 de détermination de paramètres de vol, par exemple du type connu sous l'acronyme ADAHRS, et à un moyen de sélection 60.

La figure 2 explicite le procédé selon l'invention mis en oeuvre par le dispositif 10.

Selon ce procédé, durant une première étape P1, on traduit un ordre $\underline{O}$ de déplacement selon une direction particulière en une consigne d'accélération $\underline{C}$ selon cette direction particulière.

Par exemple, les moyens de commande peuvent être du type commande impulsionnelle à trois états -, 0, + visant à réduire ou à augmenter un paramètre.

En l'occurrence, lorsqu'un pilote manoeuvre un moyen de commande, l'unité de traitement en déduit que le pilote requiert une augmentation ou une diminution de l'accélération de l'aéronef selon la direction associée au moyen de commande et par suite en déduit une consigne d'accélération $\underline{C}$.

Par exemple, l'unité de traitement 20 intègre le signal provenant du moyen de commande pour en déduire la consigne d'accélération $\underline{C}$.

Dès lors, durant une deuxième étape P2, l'unité de traitement transforme cette consigne d'accélération $\underline{C}$ par des lois prédéterminées en au moins une consigne de tenue d'assiette longitudinale $\theta^*$ transmise à un premier système automatique de tenue d'assiette longitudinale 26 contrôlant le pas cyclique longitudinal de la voilure tournante pour respecter ladite consigne de tenue d'assiette longitudinale et en une première consigne de tenue de facteur de charge Nx* dans une direction longitudinale de l'aéronef parallèle à un axe de roulis dudit aéronef transmise à un deuxième système automatique 25 de tenue dudit facteur de charge contrôlant le pas collectif des premières pales 2' du groupe propulsif pour respecter ladite première consigne Nx*.

Selon une première réalisation, le pilote manoeuvre le premier moyen de commande longitudinale 30 pour requérir un ordre $\underline{O}$ de déplacement selon une direction longitudinale de l'aéronef.

L'unité de traitement 20 détermine l'ordre $\underline{O}$ de déplacement selon une direction longitudinale en une consigne

d'accélération longitudinale $\gamma_x{}^*$ avec la relation suivante : $\gamma_X{}^* = \dfrac{1}{g}\int O.dt$ remise à zéro en l'absence d'ordre

$\underline{O}$ puis écrêtée en amplitude et vitesse de variation et où g représente l'accélération de la pesanteur.

L'unité de traitement 20 transforme alors cette consigne d'accélération longitudinale $\gamma_x{}^*$ par des lois prédéterminées en une consigne de tenue d'assiette longitudinale $\theta^*$ transmise au premier système automatique de tenue d'assiette longitudinale 26 et en une première consigne Nx* de tenue de facteur de charge transmise au deuxième système automatique 25 de tenue de facteur de charge contrôlant un pas collectif des premières pales par une régulation de type proportionnelle intégrale dérivée.

Cette consigne de tenue d'assiette longitudinale $\theta^*$ peut être déterminée par la première loi de contrôle longitudinal suivante :

$$\theta^* = (180/\text{Pi}) \bullet [(-a) \bullet (\gamma_x{}^*/g) - k]/(a+b)$$

où « $\theta^*$ » représente la consigne de tenue d'assiette longitudinale exprimée en degrés, « Pi » représente le nombre $\pi$, « $\gamma_x{}^*$ » représente la consigne d'accélération longitudinale, « g » représente l'accélération de la pesanteur, « $\bullet$ » représente le signe de la multiplication, « / » représente le signe de la division, « a » représente une première constante longitudinale, « b » représente une deuxième constante longitudinale, « k » représente une troisième constante longitudinale.

On comprend que « $\theta^*$ » est exprimé en degrés. Pour une représentation de cette consigne de tenue d'assiette longitudinale en radians, le terme 180/Pi doit être supprimé.

Par ailleurs, la première consigne de tenue de facteur de charge Nx* peut être déterminée par la deuxième loi de contrôle longitudinal suivante :

$$Nx^* = [b\bullet(\gamma_x^*/g) - k]/(a+b)$$

où « Nx* » représente ladite première consigne de tenue de facteur de charge, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la consigne de tenue d'assiette longitudinale θ* peut être modifiée par incrémentation ou décrémentation à l'aide d'un organe de réglage d'assiette lorsque la consigne d'accélération est nulle.

Par exemple, un premier moyen de commande dénommé « beep d'accélération longitudinal » par commodité permet de déterminer la consigne d'accélération longitudinale.

Dès lors, un organe de commande dénommé « beep de référence d'assiette » par commodité peut être utilisé pour modifier uniquement la consigne de tenue d'assiette longitudinale θ* à tenir par le premier système automatique lorsque la consigne d'accélération est nulle.

Selon une première variante, la troisième constante longitudinale k est égale à zéro pour annuler la première consigne Nx* de tenue de facteur de charge lorsque le pilote ne donne pas un ordre de déplacement selon ladite direction longitudinale, ladite consigne d'accélération longitudinale étant nulle.

Selon une deuxième variante, lorsque le pilote ne donne pas un ordre de déplacement selon la direction longitudinale, la première consigne Nx* de facteur de charge est égale au sinus de l'assiette longitudinale courante θ, la consigne d'accélération longitudinale $\gamma_x^*$ étant nulle. Dans ce même mode, il est aisé de rajouter une deuxième boucle de régulation sur le pas collectif des premières pales avec le paramètre de vitesse air indiquée IAS pour davantage de robustesse.

Selon une troisième variante, il est avantageux d'utiliser la troisième constante longitudinale « k » comme une consigne d'assiette d'équilibre « idéale » afin de faciliter le pilotage de l'aéronef.

On estime une assiette d'équilibre $\theta_{equi}$ dépendant des principales conditions de vol, cette assiette d'équilibre $\theta_{equi}$ optimisant les performances de l'aéronef dans des phases de vol stabilisée, à savoir lorsque la consigne d'accélération longitudinale est nulle.

Ainsi, l'assiette d'équilibre $\theta_{equi}$ est estimée en fonction de conditions de vol déterminées par exemple à l'aide de la vitesse air indiquée IAS, de l'altitude de l'aéronef, de la puissance consommée par l'aéronef, de la puissance disponible sur l'installation motrice de l'aéronef et de la vitesse verticale de l'aéronef.

La troisième constante longitudinale « k » est alors déterminée à l'aide la formule suivante : $k = -\sin(\theta_{equi})\bullet(a+b)$.

Ainsi, en phase stabilisée l'assiette à l'équilibre est automatiquement gérée et prise comme référence par la stabilisation de base du pilote automatique. Dans cette même phase, la consigne de tenue de facteur de charge Nx* correspond à « $\sin(\theta_{equi})$ » ce qui permet de conserver la vitesse de l'appareil lors de la rejointe du point d'équilibre.

Par ailleurs, les constantes longitudinales a, b, k sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,

- une deuxième combinaison longitudinale selon laquelle la première constante longitudinale vaut « 0,001 », la deuxième constante longitudinale vaut « 1 », et la troisième constante longitudinale vaut zéro,

- une troisième combinaison longitudinale selon laquelle la première constante longitudinale vaut « 0,9 », la deuxième constante longitudinale vaut « 2 », et la troisième constante longitudinale vaut zéro.

Selon une deuxième réalisation compatible avec la première réalisation, le pilote manoeuvre le deuxième moyen de commande 40 dénommé « beep d'accélération vertical » par commodité pour requérir un ordre O, cet ordre O étant un ordre de déplacement selon une direction verticale parallèle à la direction de la pesanteur.

Selon une version, un pilote peut éventuellement choisir une combinaison longitudinale en manoeuvrant un bouton de sélection. De manière alternative, l'unité de traitement peut déterminer la combinaison longitudinale à appliquer en fonction de la vitesse longitudinale de l'aéronef, déterminée à l'aide du système 50.

L'unité de traitement 20 traduit cet ordre O de déplacement selon une direction en élévation en une consigne d'accélération verticale Γz* avec la relation suivante : $\Gamma z^* = \dfrac{1}{g}\int O.dt$ remise à zéro en l'absence d'ordre pilote puis écrêtée en amplitude et en vitesse de variation et où g représente l'accélération de la pesanteur.

L'unité de traitement 20 transforme alors cette consigne d'accélération verticale Γz* en une consigne de tenue d'assiette longitudinale θ* transmise à un premier système automatique de tenue d'assiette longitudinale 26, en une première consigne Nx* de facteur de charge transmise à un deuxième système automatique 25 de tenue de facteur de charge contrôlant un pas collectif des premières pales par une régulation proportionnelle intégrale dérivée, et en une deuxième consigne NZcoll* de facteur de charge transmise à un troisième système automatique 27 de tenue de facteur de charge contrôlant une variation de pas collectif des deuxièmes pales de la voilure tournante par une régulation proportionnelle intégrale dérivée.

Il est à noter que le premier système automatique de tenue d'assiette longitudinale 26, le deuxième système automatique 25 de tenue de facteur de charge, et le troisième système automatique 27 de tenue de facteur de charge peuvent faire partie d'un même équipement.

Il est encore à noter que la consigne de tenue d'assiette longitudinale est éventuellement déterminée par la première loi de contrôle vertical suivante :

$$\theta^* = \int q^* dt$$

avec

$$q^* = (g/u) \bullet [-a'' \bullet (Nz^* + \cos\theta \bullet \cos\varphi) - k''] / (a''+b'')$$

et

$$Nz^* = (1/(a' \bullet \cos\theta \bullet \cos\varphi + b' \bullet \sin\theta)) \bullet (-a' \bullet (\Gamma z^*/g + 1) - k' \bullet \sin\theta)$$

où « θ* » représente la consigne de tenue d'assiette longitudinale exprimée en radians, « Γz* » représente la consigne d'accélération verticale, « g » représente l'accélération de la pesanteur, « u » représente la vitesse longitudinale courante de l'aéronef déterminée par le système 50, « θ » représente l'assiette longitudinale courante déterminée par le système 50, « φ » représente l'angle de roulis courant de l'aéronef déterminée par le système 50, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale θ* étant gelée et donc maintenue constante lorsque la consigne d'accélération verticale est égale à 1.

En outre, la première consigne de facteur de charge peut être déterminée par la deuxième loi de contrôle vertical suivante :

$$Nx^* = (1/(a' \bullet \cos\theta \bullet \cos\varphi + b' \bullet \sin\theta)) \bullet (b'(\Gamma z^*/g + 1) - k' \bullet \cos\theta \bullet \cos\varphi)$$

où « Nx* » représente la première consigne de tenue de facteur de charge, « Γz* » représente la consigne d'accélération verticale, « g » représente l'accélération de la pesanteur, « • » représente le signe de la multiplication, « / » représente le signe de la division, « θ » représente l'assiette longitudinale courante, « φ » représente l'angle de roulis courant de l'aéronef, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, en l'absence dudit ordre de déplacement selon une direction verticale, ladite première consigne Nx* étant égale au sinus de l'assiette longitudinale courante (θ).

Enfin, la deuxième consigne de facteur de charge est éventuellement déterminée par la troisième loi de contrôle vertical suivante :

$$NZcoll^* = (b'' \bullet (Nz^* + \cos\theta \bullet \cos\varphi) - k'') / (a'' + b'')$$

et

$$Nz^* = (1/(a'\cdot\cos\theta\cdot\cos\varphi + b'\cdot\sin\theta)) \cdot (-a'\cdot (\Gamma z^*/g + 1) - k'\cdot\sin\theta)$$

où « NZcoll* » représente la deuxième consigne de tenue de facteur de charge, « Γz* » représente la consigne d'accélération verticale, « g » représente l'accélération de la pesanteur, , « θ » représente l'assiette longitudinale courante, « φ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

En outre, les constantes verticales peuvent être choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Un pilote peut éventuellement choisir une combinaison verticale en manoeuvrant un moyen de sélection 60.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de pilotage assisté d'un aéronef (1) muni d'une voilure tournante et d'un groupe propulsif comprenant au moins une hélice (2) propulsive, chaque hélice (2) comprenant une pluralité de premières pales (2'), la voilure tournante comprenant au moins un rotor (3) muni d'une pluralité de deuxièmes pales (3'),
dans ledit procédé on traduit un ordre (O) d'un pilote de l'aéronef donné pour requérir un déplacement selon une direction longitudinale ou verticale en une consigne d'accélération (C) selon ladite direction, puis on transforme cette consigne d'accélération (C) par des lois prédéterminées en au moins une consigne de tenue d'assiette longitudinale (θ*) transmise à un premier système automatique de tenue d'assiette longitudinale (26) contrôlant un pas cyclique longitudinal des deuxièmes pales de la voilure tournante pour respecter ladite consigne de tenue d'assiette longitudinale (θ*) et en une première consigne de tenue de facteur de charge (Nx*) dans une direction longitudinale de l'aéronef parallèle à un axe de roulis dudit aéronef transmise à un deuxième système automatique (25) de tenue dudit facteur de charge contrôlant un pas collectif des premières pales (2') du groupe propulsif pour respecter ladite première consigne (Nx*),

dans ledit procédé ledit ordre (O) est un ordre de déplacement selon une direction longitudinale de l'aéronef parallèle à un axe de roulis dudit aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale (θ*) transmise à un premier système automatique de tenue d'assiette longitudinale (26) et en une première consigne (Nx*) de tenue de facteur de charge, ledit procédé étant **caractérisé en ce que** :

ladite consigne de tenue d'assiette longitudinale (θ*) est déterminée par la première loi de contrôle longitudinal suivante :

$$\theta^* = (180/\mathrm{Pi})\bullet[(-a)\bullet(\gamma_x^*/g) - k]/(a+b)$$

où « θ* » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

et/ou,

ladite première consigne de tenue de facteur de charge (Nx*) est déterminée par la deuxième loi de contrôle longitudinal suivante :

$$Nx^* = [b\bullet(\gamma_x^*/g) - k]/(a+b)$$

où « Nx* » représente ladite première consigne de tenue de facteur de charge, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale,

ledit procédé étant en outre **caractérisé en ce que** la troisième constante longitudinale « k » est déterminée par la formule suivante :

$$k = - \sin(\theta_{equi})\bullet(a+b),$$

où « • » représente le signe de la multiplication, « a » représente ladite première constante longitudinale, « b » représente ladite deuxième constante longitudinale, « $\theta_{equi}$ » représente une assiette d'équilibre prédéterminée optimisant des performances de l'aéronef dans des phases de vol stabilisées prédéterminées, la consigne d'accélération longitudinale ($\gamma_x^*$) étant nulle

2. Procédé selon la revendication 1,
**caractérisé en ce que** la consigne de tenue d'assiette longitudinale (θ*) est modifiée par incrémentation ou décrémentation par un organe de réglage d'assiette lorsque la consigne d'accélération est nulle.

3. Procédé selon la revendication 1,
**caractérisé en ce que** la troisième constante longitudinale (k) est égale à zéro pour annuler ladite première consigne (Nx*) de tenue de facteur de charge lorsque le pilote ne donne pas un ordre de déplacement selon ladite direction longitudinale, ladite consigne d'accélération longitudinale étant nulle.

4. Procédé selon l'une quelconque des revendications 1 à 3

**caractérisé en ce que** lorsque le pilote ne donne pas un ordre de déplacement selon la direction longitudinale, la première consigne (Nx*) de facteur de charge est égale au sinus de l'assiette longitudinale courante ($\theta$), la consigne d'accélération longitudinale ($\gamma_x$*) étant nulle.

5. Procédé selon l'une quelconque des revendications 1 à 4,
   **caractérisé en ce que**, lorsque ledit ordre (O) est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale en une consigne de tenue d'assiette longitudinale ($\theta$*) transmise à un premier système automatique de tenue d'assiette longitudinale (26), en une première consigne (Nx*) de facteur de charge transmise à un deuxième système automatique (26) de tenue de facteur de charge, et en une deuxième consigne (NZcoll*) de facteur de charge transmise à un troisième système automatique (27) de tenue de facteur de charge contrôlant une variation du pas collectif des deuxièmes pales de la voilure tournante.

6. Procédé selon la revendication 5,
   **caractérisé en ce que** ladite consigne de tenue d'assiette longitudinale est déterminée par la première loi de contrôle vertical suivante :

$$\theta^* = \int q^* dt$$

avec

$$q^* = (g/u) \cdot [-a'' \cdot (Nz^* + \cos\theta \cdot \cos\varphi) - k''] / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta$* » représente la consigne de tenue d'assiette longitudinale exprimée en radians, « $\Gamma$z* » représente la consigne d'accélération verticale, « g » représente l'accélération de la pesanteur, « u » représente la vitesse longitudinale courante de l'aéronef, « $\theta$ » représente l'assiette longitudinale courante, « $\varphi$ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta$* étant gelée lorsque la consigne d'accélération verticale est égale à 1.

7. Procédé selon l'une quelconque des revendications 5 à 6,
   **caractérisé en ce que** ladite première consigne de facteur de charge est déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « Nx* » représente la première consigne de tenue de facteur de charge, « $\Gamma$z* » représente la consigne d'accélération verticale , « g » représente l'accélération de la pesanteur, « • » représente le signe de la multiplication, « / » représente le signe de la division, « $\theta$ » représente l'assiette longitudinale courante, « $\varphi$ » représente l'angle de roulis courant de l'aéronef, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, en l'absence dudit ordre de déplacement selon une direction verticale, ladite première consigne Nx* étant égale au sinus de l'assiette longitudinale courante ($\theta$).

8. Procédé selon l'une quelconque des revendications 5 à 7,

**caractérisé en ce que** ladite deuxième consigne de facteur de charge est déterminée par la troisième loi de contrôle vertical suivante :

$$\text{NZcoll*} = (\ b'' \cdot (Nz^* + \cos\theta \cdot \cos\varphi) - k''\ ) / (a'' + b'')$$

et Nz* = (1/(a'•cosθ•cosφ + b'•sinθ)) • (-a'• (Γz*/g + 1) - k'•sinθ)

où « NZcoll* » représente la deuxième consigne de tenue de facteur de charge, « Γz* » représente la consigne d'accélération verticale, « g » représente l'accélération de la pesanteur, , « θ » représente l'assiette longitudinale courante, « φ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

9. Procédé selon l'une quelconque des revendications 6 à 8,
   **caractérisé en ce que** lesdites constantes verticales sont choisies dans une liste incluant au moins une des combinaisons suivantes :

   - une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,
   - une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,
   - une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,
   - une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,
   - une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,
   - une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,
   - une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

10. Dispositif (10) de pilotage assisté d'un aéronef muni d'une voilure tournante et d'un groupe propulsif comprenant au moins une hélice (2) propulsive, chaque hélice comprenant une pluralité de premières pales (2'), la voilure tournante comprenant au moins un rotor (3) muni d'une pluralité de deuxièmes pales (3').
    **caractérisé en ce qu'**il comporte au moins un moyen de commande (30, 40) pouvant être commandé par un pilote pour fournir un ordre de déplacement (O) selon une direction longitudinale ou verticale, ledit dispositif (10) ayant une unité de traitement (20) reliée au moyen de commande (30, 40), l'unité de traitement (20) exécutant des instructions pour transformer ledit ordre (O) en une consigne d'accélération (C) selon ladite direction, puis pour transformer cette consigne d'accélération (C) par des lois prédéterminées en au moins une consigne de tenue d'assiette longitudinale (θ*) transmise à un premier système automatique de tenue d'assiette longitudinale (26) contrôlant un pas cyclique longitudinal des deuxièmes pales (3') de la voilure tournante et une première consigne de tenue de facteur de charge (Nx*) dans une direction longitudinale de l'aéronef parallèle à un axe de roulis dudit aéronef transmise à un deuxième système automatique (25) de tenue de facteur de charge contrôlant le pas collectif des premières pales (2') du groupe propulsif, ledit dispositif appliquant le procédé selon l'une quelconque des revendications 1 à 9.

11. Dispositif selon la revendication 10.
    **caractérisé en ce qu'**il comporte un troisième système automatique (27) de tenue de facteur de charge pour contrôler le pas collectif desdites deuxièmes pales (3'), ladite unité de traitement (10) transmettant une deuxième consigne tenue de facteur de charge au troisième système automatique (27) de tenue de facteur de charge.

**12.** Dispositif selon la revendication 11.
**caractérisé en ce qu'**il comporte un système (50) de détermination de paramètres de vol.

**13.** Aéronef (1) hybride muni d'une voilure tournante comprenant au moins un rotor (3) et d'un groupe propulsif comprenant au moins une hélice (2),
**caractérisé en ce qu'**il comporte un dispositif (10) selon l'une quelconque des revendications 10 à 12.

**Patentansprüche**

**1.** Hilfssteuerungsverfahren für ein Luftfahrzeug (1), welches mit einem Drehflügel und einem Vortriebsaggregat versehen ist, welches mindestens einen Vortriebspropeller (2) aufweist, wobei jeder Propeller (2) eine Mehrzahl erster Rotorblätter (2') aufweist, wobei der Drehflügel mindestens einen Rotor (3) aufweist, der mit einer Mehrzahl zweiter Rotorblätter (3') versehen ist, wobei bei dem Verfahren ein Befehl ($\underline{O}$) eines Piloten des Luftfahrzeugs zur Anforderung einer Bewegung in einer Längsrichtung oder einer Vertikalrichtung in einen Sollwert einer Beschleunigung ($\underline{C}$) in diese Richtung umgesetzt wird und dieser Beschleunigungs-Sollwert ($\underline{C}$) durch vorbestimmte Regeln in mindestens einen Sollwert des Haltens der Lage ($\theta^*$) in Längsrichtung umgewandelt wird, der an ein erstes automatisches System zum Halten der Lage (26) in Längsrichtung übertragen wird, das eine zyklische Blattverstellung in Längsrichtung der zweiten Rotorblätter des Drehflügels steuert, um den Sollwert des Haltens der Lage ($\theta^*$) in Längsrichtung einzuhalten, und in einen ersten Sollwert des Haltens eines Lastfaktors (Nx*) in einer Längsrichtung des Luftfahrzeugs, die parallel zu einer Nickachse des Luftfahrzeugs ist, wobei der Sollwert an ein zweites automatisches System (25) zum Halten des Lastfaktors übertragen wird, das eine kollektive Blattverstellung der ersten Rotorblätter (2') des Vortriebsaggregats steuert, um den ersten Sollwert (Nx*) einzuhalten, wobei bei dem Verfahren der Befehl ($\underline{O}$) ein Befehl zu einer Bewegung in einer Längsrichtung des Luftfahrzeugs, parallel zu einer Nickachse des Luftfahrzeugs, ist, dieser Befehl zur Bewegung in einer Längsachse in einen Sollwert einer Längsbeschleunigung umgesetzt wird, und dieser Sollwert der Längsbeschleunigung durch vorbestimmte Regeln nur in einen Sollwert des Haltens der Lage ($\theta^*$) in Längsrichtung umgewandelt wird, der an ein erstes automatisches System zum Halten der Lage (26) in Längsrichtung übertragen wird, und in einen ersten Sollwert (Nx*) des Haltens des Lastfaktors umgesetzt wird,
**dadurch gekennzeichnet, dass** :

der Sollwert des Haltens der Lage ($\theta^*$) in Längsrichtung durch die folgende erste Längssteuerungsregel bestimmt ist:

$$\theta^* = (180/\text{Pi}) \bullet [(-a) \bullet (\gamma_x^*/g) - k]/(a+b),$$

wobei "$\theta^*$" den Sollwert des Haltens der Lage in Längsrichtung darstellt, ausgedrückt in Grad, "Pi" die Zahl $\pi$ darstellt, "$\gamma_x^*$" den Längsbeschleunigungs-Sollwert darstellt, "g" die Erdbeschleunigung darstellt, "$\bullet$" das Multiplikationszeichen darstellt, "/" das Divisionszeichen darstellt, "a" eine erste Konstante in Längsrichtung, "b" eine zweite Konstante in Längsrichtung, "k" eine dritte Konstante in Längsrichtung darstellen,
und/oder
der erste Sollwert des Haltens des Lastfaktors Nx* durch die folgende zweite Längssteuerungsregel bestimmt ist:

$$Nx^* = [b \bullet (\gamma_x^*/g) - k]/(a+b),$$

wobei "Nx*" den ersten Sollwert des Haltens des Lastfaktors darstellt, "$\gamma_x^*$" den Sollwert der Längsbeschleunigung darstellt, "g" die Erdbeschleunigung darstellt, "$\bullet$" das Multiplikationszeichen darstellt, "/" das Divisionszeichen darstellt, "a" eine erste Konstante in Längsrichtung, "b" eine zweite Konstante in Längsrichtung, "k" eine dritte Konstante in Längsrichtung darstellen,
wobei das Verfahren ferner **dadurch gekennzeichnet ist, dass** die dritte Konstante "k" in Längsrichtung durch die folgende Formel bestimmt ist:

$$k = - \sin (\theta_{equi}) \bullet (a+b),$$

wobei "•" das Multiplikationszeichen darstellt, "a" die erste Konstante in Längsrichtung, "b" die zweite Konstante in Längsrichtung darstellt, "$\theta_{equi}$" eine vorbestimmte Gleichgewichtslage darstellt, die die Leistungsfähigkeit des Luftfahrzeugs in vorbestimmten stabilisierten Flugphasen optimiert, wobei der Längsbeschleunigungs-Sollwert ($\gamma_x$*) Null ist.

2. Verfahren nach Anspruch 1,
   **dadurch gekennzeichnet, dass** der Sollwert des Haltens der Lage $\theta$* in Längsrichtung von einem Element zur Regelung der Lage durch Erhöhen oder Absenken verändert wird, wenn der Beschleunigungs-Sollwert gleich Null ist.

3. Verfahren nach Anspruch 1,
   **dadurch gekennzeichnet, dass** die dritte Konstante (k) in Längsrichtung gleich Null ist, um den ersten Sollwert (Nx*) des Haltens des Lastfaktors zu annullieren, wenn der Pilot keinen Befehl zur Bewegung in der Längsrichtung gibt, wobei der Sollwert der Beschleunigung in Längsrichtung gleich Null ist.

4. Verfahren nach einem der Ansprüche 1 bis 3,
   **dadurch gekennzeichnet, dass**, wenn der Pilot keinen Befehl zur Bewegung in der Längsrichtung gibt, der erste Sollwert (Nx*) des Lastfaktors gleich dem Sinus der aktuellen Lage ($\theta$) in Längsrichtung ist, wobei der Längsbeschleunigungs-Sollwert ($\gamma_x$*) gleich Null ist.

5. Verfahren nach einem der Ansprüche 1 bis 4,
   **dadurch gekennzeichnet, dass**, wenn der Befehl (O) ein Befehl zur Bewegung in einer vertikalen Richtung ist, die parallel zu der Richtung der Erdbeschleunigung verläuft, dieser Befehl zur Bewegung in einer Höhenrichtung in einen Sollwert einer vertikalen Beschleunigung umgesetzt wird, und dieser Sollwert der vertikalen Beschleunigung in einen Sollwert des Haltens der Lage ($\theta$*) in Längsrichtung umgewandelt wird, der an ein automatisches System zum Halten der Lage (26) in Längsrichtung übertragen wird, in einen ersten Sollwert (Nx*) des Lastfaktors, der an ein zweites automatisches System (26) zum Halten des Lastfaktors übertragen wird, und in einen zweiten Sollwert (NZcoll*) des Lastfaktors, der an ein drittes automatisches System (27) zum Halten des Lastfaktors übertragen wird, das die Änderung der kollektiven Blattverstellung der zweiten Rotorblätter des Drehflügels steuert.

6. Verfahren nach Anspruch 5,
   **dadurch gekennzeichnet, dass** der Sollwert des Haltens der Lage in Längsrichtung durch die folgende erste vertikale Steuerungsregel bestimmt ist:

$$\theta* = \int q* dt$$

mit

$$q* = (g/u) \bullet [-a'' \bullet (Nz* + \cos\theta \bullet \cos\varphi) - k''] / (a''+b'')$$

und

$$Nz* = (1/(a' \bullet \cos\theta \bullet \cos\varphi + b' \bullet \sin\theta)) \bullet (-a' \bullet \Gamma z* / g + 1) - k' \bullet \sin\theta),$$

wobei "$\theta$*" den Sollwert des Haltens der Lage in Längsrichtung, ausgedrückt in Radian darstel $\Gamma$, " z*" den Sollwert der vertikalen Beschleunigung darstellt, "g" die Erdbeschleunigung darstellt, "u" die aktuelle Längsbewegungsgeschwindigkeit des Luftfahrzeugs darstellt, "$\theta$" die aktuelle Lage in Längsrichtung darstellt, "$\varphi$" den aktuellen Nickwinkel des Luftfahrzeugs darstellt, "•" das Multiplikationszeichen, "/" das Divisionszeichen, "a' " eine erste vertikale Konstante, "b' " eine zweite vertikale Konstante, "k' " eine dritte vertikale Konstante, "a'' " eine vierte vertikale Konstante, "b'' " eine fünfte vertikale Konstante, "k'' " eine sechste vertikale Konstante darstellen, wobei der Sollwert des Haltens der Lage $\theta$* in Längsrichtung eingefroren wird, wenn der Sollwert der vertikalen Beschleunigung gleich 1 ist.

**7.** Verfahren nach einem der Ansprüche 5 bis 6,
**dadurch gekennzeichnet, dass** der erste Sollwert des Lastfaktors durch die folgende zweite Regel der vertikalen Steuerung bestimmt ist:

$$Nx^* = (1/(a'\bullet\cos\theta\bullet\cos\varphi + b'\bullet\sin\theta))\bullet(b'(\Gamma z^*/g+1) - k'\bullet \cos\theta\bullet\cos\varphi),$$

wobei "Nx*" den ersten Sollwert des Haltens des Lastfaktors darstellt, "Γz*" den Sollwert der vertikalen Beschleunigung darstellt, "g" die Erdbeschleunigung darstellt, "•" das Multiplikationszeichen, "/" das Divisionszeichen, "θ" die aktuelle Lage in Längsrichtung, "φ" den aktuellen Nickwinkel des Luftfahrzeugs, "a' " eine erste vertikale Konstante, "b' " eine zweite vertikale Konstante, "k' " eine dritte vertikale Konstante, "a" " eine vierte vertikale Konstante, "b" " eine fünfte vertikale Konstante, "k" " eine sechste vertikale Konstante darstellen, wobei in Abwesenheit des Befehls zu einer Bewegung in Vertikalrichtung der erste Sollwert Nx* gleich dem Sinus der aktuellen Lage in Längsrichtung (θ) ist.

**8.** Verfahren nach einem der Ansprüche 5 bis 7,
**dadurch gekennzeichnet, dass** der zweite Sollwert des Lastfaktors durch folgende dritte Regel der vertikalen Steuerung bestimmt ist:

$$NZcoll^* = (b'' \bullet (Nz^* + \cos\theta\bullet\cos\varphi) - k''] / (a''+b'')$$

und

$$Nz^* = (1/(a'\bullet\cos\theta\bullet\cos\varphi + b'\bullet\sin\theta))\bullet(-a'\bullet(\Gamma z^*/g+1)- k'\bullet\sin\theta),$$

wobei "NZcoll*" den zweiten Sollwert des Haltens des Lastfaktors darstellt, " Γz*" den Sollwert der vertikalen Beschleunigung darstellt, "g" die Erdbeschleunigung darstellt, "θ" die aktuelle Lage in Längsrichtung, "φ" den aktuellen Nickwinkel des Luftfahrzeugs, "•" das Multiplikationszeichen, "/" das Divisionszeichen, "a' " eine erste vertikale Konstante, "b' " eine zweite vertikale Konstante, "k' " eine dritte vertikale Konstante, "a" " eine vierte vertikale Konstante, "b" " eine fünfte vertikale Konstante, und "k" " eine sechste vertikale Konstante darstellen.

**9.** Verfahren nach einem der Ansprüche 6 bis 8,
**dadurch gekennzeichnet, dass** die vertikalen Konstanten aus einer Liste ausgewählt sind, die mindestens eine der folgenden Kombinationen enthält:

- eine erste vertikale Kombination, bei der die erste vertikale Konstante gleich "1" ist, die zweite vertikale Konstante gleich Null ist, die dritte vertikale Konstante gleich Null ist, die vierte vertikale Konstante gleich Null ist, die fünfte vertikale Konstante gleich "1" ist, und die sechste vertikale Konstante gleich Null ist,
- eine zweite vertikale Kombination, bei der die erste vertikale Konstante gleich "1" ist, die zweite vertikale Konstante gleich Null ist, die dritte vertikale Konstante gleich Null ist, die vierte vertikale Konstante gleich "0,8" ist, die fünfte vertikale Konstante gleich "1" ist, und die sechste vertikale Konstante gleich Null ist,
- eine dritte vertikale Kombination, bei der die erste vertikale Konstante gleich "1" ist, die zweite vertikale Konstante gleich Null ist, die dritte vertikale Konstante gleich Null ist, die vierte vertikale Konstante gleich "-0,6" ist, die fünfte vertikale Konstante gleich "1" ist, und die sechste vertikale Konstante gleich Null ist,
- eine vierte vertikale Kombination, bei der die erste vertikale Konstante gleich "1" ist, die zweite vertikale Konstante gleich "0,15" ist, die dritte vertikale Konstante gleich Null ist, die vierte vertikale Konstante gleich "0,8" ist, die fünfte vertikale Konstante gleich "1" ist, und die sechste vertikale Konstante gleich Null ist,
- eine fünfte vertikale Kombination, bei der die erste vertikale Konstante gleich "1" ist, die zweite vertikale Konstante gleich "0,15" ist, die dritte vertikale Konstante gleich Null ist, die vierte vertikale Konstante gleich "-0,6" ist, die fünfte vertikale Konstante gleich "1" ist, und die sechste vertikale Konstante gleich Null ist,
- eine sechste vertikale Kombination, bei der die erste vertikale Konstante gleich "1" ist, die zweite vertikale Konstante gleich "-0,15" ist, die dritte vertikale Konstante gleich Null ist, die vierte vertikale Konstante gleich "0,8" ist, die fünfte vertikale Konstante gleich "1" ist, und die sechste vertikale Konstante gleich Null ist,
- eine siebte vertikale Kombination, bei der die erste vertikale Konstante gleich "1" ist, die zweite vertikale Konstante gleich "-0,15" ist, die dritte vertikale Konstante gleich Null ist, die vierte vertikale Konstante gleich "-0,6" ist, die fünfte vertikale Konstante gleich "1" ist, und die sechste vertikale Konstante gleich Null ist.

**10.** Vorrichtung (10) zur Hilfssteuerung eines Luftfahrzeugs mit einem Drehflügel und einem Vortriebsaggregat, welches mindestens einen Vortriebspropeller (2) aufweist, wobei jeder Propeller eine Mehrzahl erster Rotorblätter (2') aufweist, wobei der Drehflügel mindestens einen Rotor (3) aufweist, der mit einer Mehrzahl zweiter Rotorblätter (3') versehen ist,

**dadurch gekennzeichnet, dass** die Vorrichtung mindestens ein Steuermittel (30, 40) aufweist, das von einem Piloten gesteuert werden kann, um einen Befehl (O) zur Bewegung in einer Längsrichtung oder einer Vertikalrichtung zu liefern, wobei die Vorrichtung (10) eine Verarbeitungseinheit (20) aufweist, die mit dem Steuermittel (30, 40) verbunden ist, wobei die Verarbeitungseinheit (20) Befehle ausführt zum Umwandeln des Befehls (O) in einen Sollwert einer Beschleunigung (C) in diese Richtung und zum Umwandeln dieses Beschleunigungs-Sollwerts (C) durch vorbestimmte Regeln in mindestens einen Sollwert des Haltens der Lage (θ*) in Längsrichtung, der an ein erstes automatisches System zum Halten der Lage (26) in Längsrichtung übertragen wird, das eine zyklische Blattverstellung in Längsrichtung der zweiten Rotorblätter (3') des Drehflügels steuert und einen ersten Sollwert des Haltens des Lastfaktors (Nx*) in einer Längsrichtung des Luftfahrzeugs, die parallel zu einer Nickachse des Luftfahrzeugs verläuft, der an ein zweites automatisches System (25) zum Halten des Lastfaktors übertragen wird, welches die kollektive Blattverstellung der ersten Rotorblätter (2') des Vortriebsaggregats steuert, wobei die Vorrichtung das Verfahren nach einem der Ansprüche 1 bis 9 ausführt.

**11.** Vorrichtung nach Anspruch 10,

**dadurch gekennzeichnet, dass** sie ein drittes automatisches System (27) zum Halten des Lastfaktors aufweist, um die kollektive Blattverstellung der zweiten Rotorblätter (3') zu steuern, wobei die Verarbeitungseinheit (10) einen zweiten Sollwert des Haltens des Lastfaktors an das dritte automatische System (27) des Haltens des Lastfaktors sendet.

**12.** Vorrichtung nach Anspruch 11,

**dadurch gekennzeichnet, dass** es ein System (50) zur Bestimmung von Flugparametern aufweist.

**13.** Hybridluftfahrzeug (1) mit einem Drehflügel, welches mindestens einen Rotor (3) und ein Vortriebsaggregat mit mindestens einem Propeller (2) aufweist,

**dadurch gekennzeichnet, dass** es eine Vorrichtung (10) nach einem der Ansprüche 10 bis 12 aufweist.

**Claims**

**1.** Method for assisted piloting of an aircraft (1) provided with a rotary wing and a propulsion unit comprising at least one propulsion propeller (2), each propeller (2) comprising a plurality of first blades (2'), the rotary wing comprising at least one rotor (3) provided with a plurality of second blades (3'),

in said method an order (O) of a pilot of the aircraft given to request a movement along a longitudinal or vertical direction is translated into an acceleration setpoint (C) along said direction, and then this acceleration setpoint (C) is transformed by predetermined relationships into at least one setpoint for maintaining longitudinal attitude (θ*) transmitted to a first automatic system for maintaining longitudinal attitude (26) controlling a longitudinal cyclic pitch of the second blades of the rotary wing in order to comply with said setpoint for maintaining longitudinal attitude (θ*) and into a first setpoint for maintaining load factor (Nx*) in a longitudinal direction of the aircraft parallel to a roll axis of said aircraft transmitted to a second automatic system (25) for maintaining said load factor controlling a collective pitch of the first blades (2') of the propulsion unit in order to comply with said first setpoint (Nx*),

in which method said order (O) is an order to move along a longitudinal direction of the aircraft parallel to a roll axis of said aircraft, this order to move along a longitudinal direction is translated into a longitudinal acceleration setpoint, and then this longitudinal acceleration setpoint is transformed by predetermined relationships solely into a setpoint for maintaining longitudinal attitude (θ*) transmitted to a first automatic system for maintaining longitudinal attitude (26) and into a first setpoint (Nx*) for maintaining load factor,

said method **characterised in that**:

said setpoint for maintaining longitudinal attitude (θ*) is determined by the following first longitudinal control relationship:

$$\theta* = (180/\text{Pi}) \cdot [(-a) \cdot (\gamma_x*/g) - k] / (a+b)$$

where "$\theta*$" represents the setpoint for maintaining longitudinal attitude expressed in degrees, "Pi" represents the number $\pi$, "$\gamma_x*$" represents the longitudinal acceleration setpoint, "g" represents the acceleration due to gravity, "·" represents the multiplication sign, "/" represents the division sign, "a" represents a first longitudinal constant, "b" represents a second longitudinal constant, "k" represents a third longitudinal constant.

and/or,

said first setpoint for maintaining load factor (Nx*) is determined by the following second longitudinal control relationship:

$$Nx* = [b \cdot (\gamma_x*/g) - k] / (a+b)$$

where "Nx*" represents said first setpoint for maintaining load factor, "$\gamma_x*$" represents the longitudinal acceleration setpoint, "g" represents the acceleration due to gravity, "•" represents the multiplication sign, "/" represents the division sign, "a" represents a first longitudinal constant, "b" represents a second longitudinal constant, "k" represents a third longitudinal constant, said method being further **characterised in that** the third longitudinal constant "k" is determined by the following formula:

$$k = - \sin(\theta_{equi}) \cdot (a+b),$$

where "•" represents the multiplication sign, "a" represents said first longitudinal constant, "b" represents said second longitudinal constant, and "$\theta_{equi}$" represents a predetermined equilibrium attitude optimizing the performance of the aircraft in predetermined stabilized flight phases, the longitudinal acceleration setpoint ($\gamma_x*$) being zero

2. Method according to claim 1,
   **characterised in that** the setpoint for maintaining longitudinal attitude ($\theta*$) is modified by incrementing or decrementing by an attitude adjustment member when the acceleration setpoint is zero.

3. Method according to claim 1,
   **characterised in that** the third longitudinal constant (k) is equal to zero in order to cancel said first setpoint (Nx*) for maintaining load factor when the pilot does not give an order to move in said longitudinal direction, said longitudinal acceleration setpoint being zero.

4. Method according to any one of claims 1 to 3,
   **characterised in that** when the pilot does not give an order to move along the longitudinal direction, the first load factor setpoint (Nx*) is equal to the sine of the current longitudinal attitude ($\theta$), the longitudinal acceleration setpoint ($\gamma_x*$) being zero.

5. Method according to any one of claims 1 to 4,
   **characterised in that**, when said order (O) is an order to move along a vertical direction parallel to the gravity direction, this movement order is translated along an elevation direction into a vertical acceleration setpoint, and then this vertical acceleration setpoint is transformed into a setpoint for maintaining longitudinal attitude ($\theta*$) transmitted to a first automatic system for maintaining longitudinal attitude (26), into a first load factor setpoint (Nx*) transmitted to a second automatic system (26) for maintaining load factor, and into a second load factor setpoint (NZcoll*) transmitted to a third automatic system (27) for maintaining load factor controlling a collective pitch variation of the second blades of the rotary wing.

6. Method according to claim 5,
   **characterised in that** said setpoint for maintaining longitudinal attitude is determined by the following first vertical control relationship:

$$\theta^* = \int q^* dt$$

with

$$q^*=(g/u)\cdot[-a''\cdot(Nz^* + \cos\theta\cdot\cos\varphi) - k'']/(a''+b'')$$

and

$$Nz^*=(1/(a'\cdot\cos\theta\cdot\cos\varphi + b'\cdot\sin\theta))\cdot(-a'\cdot(\Gamma z^*/g + 1) - k'\cdot\sin\theta)$$

where "θ*" represents the setpoint for maintaining longitudinal attitude expressed in radians, "Γz*" represents the vertical acceleration setpoint, "g" represents the acceleration due to gravity, "u" represents the current longitudinal speed of the aircraft, "θ" represents the current longitudinal attitude, "φ" represents the current roll angle of the aircraft, "•" represents the multiplication sign, "/" represents the division sign, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant, the setpoint for maintaining longitudinal attitude θ* being frozen when the vertical acceleration setpoint is equal to 1.

7. Method according to any one of claims 5 to 6,
   **characterised in that** said first load factor setpoint is determined by the following second vertical control relationship:

$$Nx^*=(1/(a'\cdot\cos\theta\cdot\cos\varphi + b'\cdot\sin\theta))\cdot(b'(\Gamma z^*/g + 1)-k'\cdot\cos\theta\cdot\cos\varphi)$$

where "Nx*" represents the first required load factor setpoint, "Γz*" represents the vertical acceleration setpoint, "g" represents the acceleration due to gravity, "•" represents the multiplication sign, "/" represents the division sign, "θ" represents the current longitudinal attitude, "φ" represents the current roll angle of the aircraft, "a'" represents a first vertical constant, "b'" represents a second vertical constant, "k'" represents a third vertical constant, "a''" represents a fourth vertical constant, "b''" represents a fifth vertical constant, k" represents a sixth vertical constant, in the absence of said order to move along a vertical direction, said first setpoint Nx* being equal to the sine of the current longitudinal attitude (θ).

8. Method according to any one of claims 5 to 7,
   **characterised in that** said second load factor setpoint is determined by the following third vertical control relationship:

$$NZcoll^* = (b''\cdot(Nz^* + \cos\theta\cdot\cos\varphi) - k'')/(a'' + b'')$$

and

$$Nz^* = (1/(a'\cdot\cos\theta\cdot\cos\varphi + b'\cdot\sin\theta))\cdot(-a'\cdot(\Gamma z^*/g + 1) - k'\cdot\sin\theta)$$

where "Nzcoll*" represents the second setpoint for maintaining load factor, "Γz*" represents the vertical acceleration setpoint, "g" represents the acceleration due to gravity, "θ" represents the current longitudinal attitude, "φ" represents the current roll angle of the aircraft, "·" represents the multiplication sign, "/" represents the division sign, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant.

9. Method according to any one of claims 6 to 8,
   **characterised in that** said vertical constants are selected from a list including at least one of the following combinations:

- a first vertical combination according to which the first vertical constant is equal to "1", the second vertical constant is equal to zero, the third vertical constant is equal to zero, the fourth vertical constant is equal to zero, the fifth vertical constant is equal to "1", and the sixth vertical constant is equal to zero,
- a second vertical combination according to which the first vertical constant is equal to "1", the second vertical constant is equal to zero, the third vertical constant is equal to zero, the fourth vertical constant is equal to "0.8", the fifth vertical constant is equal to "1", and the sixth vertical constant is equal to zero,
- a third vertical combination according to which the first vertical constant is equal to "1", the second vertical constant is equal to zero, the third vertical constant is equal to zero, the fourth vertical constant is equal to "-0.6", the fifth vertical constant is equal to "1", and the sixth vertical constant is equal to zero,
- a fourth vertical combination according to which the first vertical constant is equal to "1", the second vertical constant is equal to "0.15", the third vertical constant is equal to zero, the fourth vertical constant is equal to "0.8", the fifth vertical constant is equal to "1", and the sixth vertical constant is equal to zero,
- a fifth vertical combination according to which the first vertical constant is equal to "1", the second vertical constant is equal to "0.15", the third vertical constant is equal to zero, the fourth vertical constant is equal to "-0.6", the fifth vertical constant is equal to "1", and the sixth vertical constant is equal to zero,
- a sixth vertical combination according to which the first vertical constant is equal to "1", the second vertical constant is equal to "-0.15", the third vertical constant is equal to zero, the fourth vertical constant is equal to "0.8", the fifth vertical constant is equal to "1", and the sixth vertical constant is equal to zero,
- a seventh vertical combination according to which the first vertical constant is equal to "1", the second vertical constant is equal to "-0.15", the third vertical constant is equal to zero, the fourth vertical constant is equal to "-0.6", the fifth vertical constant is equal to "1", and the sixth vertical constant is equal to zero.

10. Device (10) for assisted piloting of an aircraft provided with a rotary wing and a propulsion unit comprising at least one propulsion propeller (2), each propeller comprising a plurality of first blades (2'), the rotary wing comprising at least one rotor (3) provided with a plurality of second blades (3'),
**characterised in that** it comprises at least one control means (30, 40) suitable for being controlled by a pilot to deliver a movement order ($\underline{O}$) for movement along a longitudinal or vertical direction, said device (10) having a processing unit (20) connected to the control means (30, 40), the processing unit (20) executing instructions to transform said order ($\underline{O}$) into an acceleration setpoint ($\underline{C}$) along said direction, and then to transform this acceleration setpoint ($\underline{C}$) by predetermined relationships into at least one setpoint for maintaining longitudinal attitude ($\theta^*$) transmitted to a first automatic system for maintaining longitudinal attitude (26) controlling a longitudinal cyclic pitch of the second blades (3') of the rotary wing and into a first setpoint for maintaining load factor (Nx*) in a longitudinal direction of the aircraft parallel to a roll axis of said aircraft transmitted to a second automatic system (25) for maintaining load factor controlling the collective pitch of the first blades (2') of the propulsion unit, said device applying the method according to any one of claims 1 to 9.

11. Device according to claim 10,
**characterised in that** it comprises a third automatic system (27) for maintaining load factor to control the collective pitch of said second blades (3'), said processing unit (10) transmitting a second setpoint for maintaining load factor to the third automatic system (27) for maintaining load factor.

12. Device according to claim 11,
**characterised in that** it comprises a system (50) for determining flight parameters.

13. Hybrid aircraft (1) provided with a rotary wing comprising at least one rotor (3) and a propulsion unit comprising at least one propeller (2),
**characterised in that** it comprises a device (10) according any one of claims 10 to 12.

# Fig.1

# Fig.2

**EP 2 597 035 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080237392 A